# EUROPÄISCHE PATENTANMELDUNG

(11) **EP 3 840 207 A1**
(43) Veröffentlichungstag der Anmeldung: **23.06.2021**
(21) Anmeldenummer: 20215498.5
(22) Anmeldetag: 18.12.2020
(51) Int. Cl.: H02M 7/00, H02M 5/458, H01B 9/04, H01B 9/00

(54) **NIEDERINDUKTIVES VERBINDEN RÄUMLICH GETRENNTER STROMRICHTERANORDNUNGEN**

(30) Priorität: 19.12.2019 DE 102019220264
(71) Anmelder: Bombardier Transportation GmbH, 10785 Berlin (DE)
(72) Erfinder: Bodemüller, Felix, 68165 Mannheim (DE); Reinhold, Harry, 68549 IIvesheim (DE)
(74) Vertreter: Patentanwälte Bressel und Partner mbB

(57) **Zusammenfassung**

Die Erfindung betrifft eine Anordnung (10), mit:
- einer ersten Stromrichteranordnung (12), die dazu eingerichtet ist, Gleichstrom in einen Gleichspannungs-Zwischenkreis (16) einzuspeisen;
- einer zweiten Stromrichteranordnung (14), die dazu eingerichtet ist, dem Gleichspannungs-Zwischenkreis (16) Gleichstrom zu entnehmen;
wobei der Gleichspannungs-Zwischenkreis (16) eine elektrische Primärverbindung (29) der ersten und zweiten Stromrichteranordnung (12, 14) aufweist, mit wenigstens einer ersten Primärleitung (30) zum elektrischen Verbinden erster Anschlüsse (28) der Stromrichteranordnungen (12, 14) und wenigstens einer zweiten Primärleitung (32) zum elektrischen Verbinden zweiter Anschlüsse (29) der Stromrichteranordnungen (12, 14); wobei der Gleichspannungs-Zwischenkreis (16) ferner eine im Vergleich zur Primärverbindung (29) niederinduktive Sekundärverbindung (34) aufweist, mit wenigstens einer ersten Sekundärleitung (31), die der ersten Primärleitung (30) parallelgeschaltet ist, und wenigstens einer zweiten Sekundärleitung (33), die der zweiten Primärleitung (32) parallelgeschaltet ist.

Ferner betrifft die Erfindung ein Antriebssystem (1) eines Schienenfahrzeugs mit einer solchen Anordnung (10) und ein Verfahren zum Herstellen einer solchen Anordnung (10).

## Beschreibung

Die Erfindung betrifft eine Anordnung insbesondere für ein elektrisches Antriebssystem eines Schienenfahrzeugs, ein Schienenfahrzeug mit einer solchen Anordnung und ein Verfahren zum Herstellen einer solchen Anordnung. Insbesondere können bei der Anordnung räumlich getrennte Gleichspannungs-Zwischenkreise (Teil-Zwischenkreise) mindestens zweier Stromrichteranordnungen niederinduktiv über eine Leiteranordnung verbunden sein.

Anordnungen mit räumlich getrennten Stromrichtern und insbesondere räumlich getrennten Gleichspannungs-Zwischenkreisen von Stromrichtern, die über einen Entkopplungskreis verbunden sind, sind aus dem Stand der Technik bekannt. Im Rahmen dieser Offenbarung werden einzelnen Stromrichtern zuordenbare und vorzugsweise bauliche in diese integrierte Gleichspannungs-Zwischenkreise auch als Teil-Zwischenkreise bezeichnet. Der Begriff "Teil" bezieht sich auf die Tatsache, dass diese Zwischenkreise Teil der gesamten Anordnung und insbesondere Teil eines aus dem Verbinden der Stromrichter resultierenden übergeordneten Gleichspannungs-Zwischenkreises sein können.

Beispielsweise ist es bei Traktionssystemen (mit anderen Worten Antriebssystemen) von Schienenfahrzeugen bekannt, dass der Strom aus einer fahrzeugexternen Quelle (zum Beispiel einem Versorgungsnetz) über einen Stromabnehmer abgegriffen und von einem Haupttransformator transformiert wird. Anschließend wird mit einem ersten Stromrichter der in der Regel noch vorliegende Wechselstrom in einen Gleichstrom gewandelt und in einen Gleichspannungs- Zwischenkreis eingespeist. An diesen angeschlossen sind weitere Stromrichter, die als Wechselrichter betrieben werden und den Gleichstrom des Gleichspannungs-Zwischenkreises in Wechselstrom wandeln. Dieser kann anschließend Verbrauchern, wie z.B. sogenannten Hilfsbetrieben oder aber den Traktionsmotoren, zur Verfügung gestellt werden.

Es ist auch bekannt, die Stromrichteranordnungen zum Beispiel im Falle eines regenerativen Bremsbetriebes in umgekehrter Weise zu betreiben. Dann werden die ursprünglich als Wechselrichter betriebenen Stromrichter als Gleichrichter betrieben und wandeln von den Traktionsmotoren, die in einem Generatormodus betreiben werden, erzeugten Wechselstrom in Gleichstrom für den Gleichspannungs- Zwischenkreis um. Die zwischen dem Gleichspannungs- Zwischenkreis und Haupttransformator geschalteten Stromrichter werden hingegen als Wechselrichter betrieben, die den Gleichstrom des Gleichspannungs- Zwischenkreises in Wechselstrom wandeln. Hierdurch wird ein Rückspeisen elektrischer Energie in das Bahnversorgungsnetz ermöglicht.

Die Stromrichter werden zum Beispiel aus Leistungs-, Kosten-, oder Bauraum bedingten Gründen oftmals aus einzelnen Teilstromrichtern oder Stromrichtermodulen zusammengesetzt. Es kann sich also um mehrteilig aufgebaute Stromrichteranordnungen handeln, die wenigstens zwei Stromrichterkomponenten oder, mit anderen Worten, wenigstens zwei Stromrichtermodule oder zwei (Einzel-) Stromrichter umfassen. Ein jedes Stromrichtermodul kann für sich genommen eine gewünschte Stromumwandlung vornehmen, kann aber z.B. aus Leistungsgründen mit weiteren Modulen einer Stromrichteranordnung zusammenwirken und wird bevorzugt gemeinsam mit diesen gleichartig angesteuert und/oder getaktet.

Die Verbindung der Gleichspannungs-Zwischenkreise zweier oder mehrerer solcher Stromrichtermodule von unterschiedlichen Stromrichteranordnungen weist schon bei geringen geometrischen Abständen der Module von weniger als einem Meter induktiven Charakter auf, dessen Induktivität eine Resonanz mit in der Regel dann verbundenen Zwischenkreiskondensatoren der Module bzw. von deren Teil-Zwischenkreise hervorrufen kann.

Da, wie nachstehend noch näher erläutert, die zu verbindenden Teil-Zwischenkreise und/oder die hierüber verbundenen Stromrichteranordnungen ein schwingungsfähiges System bilden, erfolgt das Verbinden der Stromrichteranordnungen in der Regel bei kurzen Distanzen von unter einem Meter über niederinduktive Stromschienen. Mit der Niederinduktivität sollen Resonanzfrequenzen dieses schwingungsfähigen Systems gezielt beeinflusst und außerhalb eines erwarteten Anregungsspektrums platziert werden.

Genauer gesagt beeinflusst die Stromschiene durch ihre niederinduktiven Eigenschaften gezielt das Resonanzverhalten des Gleichspannungs-Zwischenkreises, der durch die Schaltfrequenzen der Stromrichteranordnungen in an sich bekannter Weise zu Schwingungen angeregt werden kann. Diese Schwingungen können insbesondere in Form von schwingenden Strömen (zum Beispiel ausgehend von Kondensatoren im Gleichspannungs-Zwischenkreis) vorliegen bzw. darin resultieren.

Die in der Regel planaren Stromschienen sind jedoch hinsichtlich ihres räumlichen Verlaufs unflexibel. Die Stromrichteranordnungen müssen daher oftmals auf gleicher Höhe und/oder nahe beieinander positioniert werden, um ein Verbinden mittels Stromschienen zu ermöglichen. Auch müssen in der Regel sämtliche Stromrichtermodule einer mehrteiligen Stromrichteranordnung entlang der Stromschiene gruppiert werden, was zusätzliche Anordnungs- und Bauraumbeschränkungen mit sich bringt. Weiter kann es bei einem Verbinden einer Mehrzahl von Modulen erforderlich sein, Gehäusewände vergleichsweise großflächig mit den Stromschienen zu durchstoßen, was den Aufwand und die Kosten erhöht.

Bei größeren Distanzen der Teil-Zwischenkreise können die Teil-Zwischenkreiskapazitäten mit der Induktivität der Verbindung Resonanzen im taktfrequenten Bereich der Stromrichteranordnungen bilden. Oftmals wird daher eine Entkopplungsinduktivität vorgesehen, mit der diese Resonanzfrequenz unterhalb der Taktungsharmonischen verschoben wird. Diese Resonanz muss aufgrund dynamischer Lastvorgänge ausreichend bedämpft werden, was zu Energieverlusten führt.

Das Vorsehen derartiger Entkopplungsnetzwerke erhöht außerdem die Baugröße, das Gewicht und die Kosten. Beispielsweise müssen Entkopplungsnetzwerke auch stets für den maximalen Gleichstrom ausgelegt werden, der innerhalb des Gleichspannungs-Zwischenkreises theoretisch auftreten kann.

Weiter ist bekannt, dass es aufgrund dynamischer Vorgänge wie Taktsperren oder Ladevorgängen in zum Beispiel den Teil-Zwischenkreisen zu Überspannungen kommen kann. Die Teil-Zwischenkreise müssen dann mit zusätzlichen Überspannungsschutzeinrichtungen versehen werden, was ebenfalls die Kosten erhöht.

Es besteht somit ein Bedarf dafür, Anordnungen mit baulich beabstandeten Stromrichtern bzw. Stromrichteranordnungen, die miteinander elektrisch verbunden werden sollen, hinsichtlich Kosten und Einbauflexibilität zu verbessern.

Diese Aufgabe wird durch eine Anordnung, ein Schienenfahrzeug und ein Verfahren gemäß den beigefügten unabhängigen Ansprüchen gelöst. Vorteilhafte Weiterbildungen sind in den abhängigen Ansprüchen angegeben. Es versteht sich, dass sämtliche der einleitenden Bemerkungen und Merkmale auch bei der vorliegenden Erfindung vorgesehen sein beziehungsweise auf diese zutreffen können, sofern nicht anders angegeben oder ersichtlich.

Die erfindungsgemäße Lösung (also die Anordnung, das Schienenfahrzeug und das Verfahren gemäß den beigefügten unabhängigen Ansprüchen) sieht allgemein vor, als Alternative zu starren und unflexiblen Stromschienen oder aber teuren bedämpften Entkopplungsnetzwerken den Gleichspannungs-Zwischenkreis mittels anderweitiger Verbindungen zu realisieren. Konkret wird das Vorsehen von elektrischen Leitungen zum Verbinden der Stromrichteranordnungen vorgeschlagen, wobei diese Leitungen insbesondere mittels kostengünstigen und im Verlauf flexibel anordenbaren Kabel bereitgestellt sind.

Offenbart aber nicht beansprucht wird, dennoch Stromschienen zu verwenden, zu denen aber zusätzliche elektrische Verbindungen/Leitungen parallelgeschaltet sein können, ohne zwingend die bisher verwendeten Entkopplungsnetzwerke vorsehen zu müssen.

Zum Erzielen gewünschter Resonanzeigenschaften der Teil-Zwischenkreise wird diesen auch als Primärverbindung bezeichneten Leitungen eine Sekundärverbindung parallelgeschaltet. Beispielsweise kann die Primärverbindung ein erstes Leiterpaar umfassen, um die unterschiedlichen Anschlüsse beziehungsweise Anschlussklemmen (das heißt, der Pluspol und Minuspol der Stromrichteranordnungen) jeweils miteinander zu verbinden. Diesem kann dann ein zweites Leiterpaar, welches eine Sekundärverbindung bildet, elektrisch parallelgeschaltet werden. Aufgrund der Parallelschaltung dieses zweiten Leiterpaares kann die Induktivität der insgesamt vorliegenden elektrischen Verbindung(en) der Stromrichteranordnungen bzw. des Gleichspannungs-Zwischenkreises gesenkt werden.

Vorteilhafterweise sieht die Erfindung vor, dass die Sekundärverbindung selbst auch eine gezielt niedrige Induktivität aufweist und insbesondere eine niedrigere Induktivität als die Primärverbindung. Allgemein gesprochen kann die Sekundärverbindung niederinduktiv sein. Die Sekundärverbindung (oder allgemein eine niederinduktive Verbindung) kann beispielsweise eine Induktivität zwischen 1 nH und 100 µH aufweisen. Sie kann allgemein nicht mehr als 50% oder nicht mehr als 10% der Induktivität der Primärverbindung aufweisen.

Auch die Sekundärverbindung kann aus Leitern, aus Kabeln oder als (gegebenenfalls mehradriges) Kabel bereitgestellt sein, was wiederum die Kosten senkt und die Einbauflexibilität erhöht. Beispiele bevorzugter Kabel werden nachstehend erläutert. Insbesondere kann es sich um ein verdrilltes Leiterpaar oder auch lediglich nah aneinander positionierte unverdrillte Leiter handeln, die zum Beispiel einen Abstand von weniger als 1 cm oder auch weniger als 1mm über zumindest einen Großteil ihrer Länge aufweisen.

Allgemein wird somit eine Lösung bereitgestellt, die durch Vorsehen der niederinduktiven Sekundärverbindung das Einstellen eines bevorzugten Resonanzverhaltens des Gleichspannungs- Zwischenkreises ermöglicht, insbesondere derart, dass dessen Resonanzfrequenz außerhalb eines Anregungsspektrums liegt, das zum Beispiel durch die Taktungsfrequenz der Stromrichteranordnungen vorgegeben ist. Dies gelingt bei einer gleichzeitig erhöhten Einbauflexibilität, da der Verlauf der Primär- und auch der Sekundärverbindung allgemein flexibler gestaltet werden kann, als dies bei starren Stromschienen der Fall ist.

Allgemein kann die Sekundärverbindung und/oder die Primärverbindung zumindest abstandsweise flexibel verlegbar, flexibel anordnenbar und/oder flexibel biegbar sein. Ferner allgemein können die Sekundärverbindung und/oder die Primärverbindung zumindest abschnittsweise unter ihrem Eigengewicht deformierbar sein (das heißt, können allgemein formschlaff sein).

Wie erwähnt, können die Sekundärverbindung und/oder die Primärverbindung zumindest abschnittsweise Kabel umfassen, welche jegliche der vorstehend genannten Eigenschaften zum Beispiel hinsichtlich Formschlaffheit und/oder Biegbarkeit aufweisen können. Hierdurch können auch räumlich verteilte Stromrichterkomponenten/-module einer Stromrichteranordnung mit weiteren Stromrichteranordnungen beziehungsweise deren Modulen verbunden werden. Insbesondere kann ein Verbinden auf unterschiedlichen Höhenniveaus und/oder trotz Beabstandungen um mehr als einen Meter erfolgen. Auch kann der Gleichspannungs-Zwischenkreis in beengten räumlichen Verhältnissen (zum Beispiel innerhalb eines Maschinenraums eines Schienenfahrzeugs und/oder innerhalb eines Traktionssystems) oder in einem verwinkelten und nicht zwingend gradlinigen Einbauraum angeordnet werden.

Ebenso ist es aber möglich, dass zumindest eine von Sekundärverbindung und/oder die Primärverbindung zumindest abschnittsweise eine Stromschiene umfasst. Die entsprechend andere von Sekundärverbindung und/oder Primärverbindung kann beispielsweise Kabel umfassen, sodass prinzipiell auch Kombinationen von Stromschienen und Kabeln vorgesehen sein können, aber hier nicht beansprucht werden.

Weiter zeichnet sich die Lösung durch geringere Energieverluste (insbesondere der niederfrequenten Anteile) und ein geringeres Gewicht aus, als dies mit vorstehend erwähnten Entkopplungsnetzwerken der Fall ist.

Kosten-und Gewichtseinsparpotenziale ergeben sich auch daraus, dass die Primärverbindung nur oder überwiegend für niederfrequente Anteile der Ströme dimensioniert werden muss, die niederinduktive Sekundärverbindung hingegen nur oder überwiegend für den höherfrequenten Anteil der Ströme.

Die Stromrichteranordnungen können jegliche der folgenden umfassen oder als solche ausgebildet sein: Pulswechselrichter, Pulsgleichrichter, Diodengleichrichter (vorzugsweise mit kapazitiver Glättung), Hochsetzsteller, Tiefsetzsteller.

Insbesondere schlägt die Erfindung eine Anordnung vor, u. a. mit:
- einer ersten (zum Beispiel zweiteiligen oder mehrteiligen, das heißt mehrere Stromrichtermodule umfassenden) Stromrichteranordnung, die dazu eingerichtet ist (zumindest in einem ersten Betriebsmodus) Gleichstrom in einen Gleichspannungs-Zwischenkreis einzuspeisen;
- einer zweiten (zum Beispiel zweiteiligen oder mehrteiligen, das heißt mehrere Stromrichtermodule umfassenden) Stromrichteranordnung, die dazu eingerichtet ist (zumindest in einem ersten Betriebsmodus) dem Gleichspannungs-Zwischenkreis Gleichstrom zu entnehmen;
wobei der Gleichspannungs-Zwischenkreis (der z.B. einer Verbindung von etwaigen Teil-Zwischenkreisen der Stromrichteranordnung entsprechen oder diese umfassen kann) eine elektrische Primärverbindung der ersten und zweiten Stromrichteranordnung aufweist, mit wenigstens einer ersten Primärleitung zum elektrischen Verbinden erster Anschlüsse der Stromrichteranordnungen und wenigstens einer zweiten Primärleitung zum elektrischen Verbinden zweiter Anschlüsse der Stromrichteranordnungen; und
wobei der Gleichspannungs-Zwischenkreis (der z.B. einer Verbindung von etwaigen Teil-Zwischenkreisen der Stromrichteranordnung entsprechen oder diese umfassen kann) ferner eine im Vergleich zur Primärverbindung niederinduktive (das heißt, eine geringere Induktivität aufweisende) Sekundärverbindung aufweist, mit wenigstens einer ersten Sekundärleitung, die der ersten Primärleitung parallelgeschaltet ist, und wenigstens einer zweiten Sekundärleitung, die der zweiten Primärleitung parallelgeschaltet ist.

Die Primärleitungen und Sekundärleitungen können jeweils als ein eigenständiges (das heißt, eigenständig anordenbares und/oder baulich unabhängiges und/oder separates) Kabel ausgebildet sein oder einen entsprechend eigenständigen elektrischen Leiter umfassen. Sie können aber auch zumindest abschnittsweise in einem gemeinsamen Kabel bereitgestellt sein, zum Beispiel als einzelne elektrische Leiter oder Adern innerhalb dieses Kabels. Insbesondere kann ein Primärkabel umfassend die beiden Primärleitungen und/oder ein Sekundärkabel umfassend die beiden Sekundärleitungen bereitgestellt werden. Auch Mischformen sind möglich, bei der ein Kabel sowohl wenigstens eine Primär- als auch wenigstens eine Sekundärleitung umfasst.

Die Primärverbindung kann Klemmen und/oder Spannungspole der Stromrichteranordnungen miteinander verbinden, also zum Beispiel den Pluspol der ersten Stromrichteranordnung mit dem Pluspol der zweiten Stromrichteranordnung und den Minuspol der ersten Stromrichteranordnung mit dem Minuspol der zweiten Stromrichteranordnung. Dies kann jeweils mit einer der Primärleitungen erfolgen.
Die Stromrichteranordnungen können allgemein räumlich voneinander beabstandet sein. Dies kann sich auf räumliche Beabstandung in einer horizontalen Raumebene beziehen und/oder eine Beabstandung in vertikaler Raumrichtung. Die vertikale Raumrichtung kann dabei orthogonal zur horizontalen Raumebene sowie in Richtung der Gravitationskraft verlaufen. Insbesondere können also die Anschlüsse der Stromrichteranordnungen räumlich voneinander beabstandet sein und sich insbesondere auf unterschiedlichen Höhenniveaus befinden. Die vorstehenden Angaben können sich jeweils auf den eingebauten Zustand zum Beispiel in einem Schienenfahrzeug und/oder dessen Antriebssystem beziehen.

Der Gleichspannungs-Zwischenkreis kann wenigstens einen Zwischenkreiskondensator umfassen. Dieser kann Bestandteil eines sogenannten Teil-Zwischenkreises sein. Der Zwischenkreiskondensator bzw. Teil-Zwischenkreis kann von einer der Stromrichteranordnungen umfasst sein und/oder baulich in diese integriert und/oder baulich mit dieser zusammengefasst sein. So ist es beispielsweise bekannt, innerhalb einer Stromrichteranordnung einen Teil-Zwischenkreis auszubilden, der ein mit den Anschlüssen (das heißt im Plus- und Minuspol) dieser Stromrichteranordnung verbundenen und insbesondere parallelgeschalteten Kondensator umfasst. Dieser kann dann mittels der Primärverbindung mit der weiteren Stromrichteranordnung und einem gegebenenfalls dort ebenfalls vorhandenen Teil-Zwischenkreis verbunden werden.

Die Primärverbindung kann daher auch eine Verknüpfung von wenigstens einem Teil-Zwischenkreis, der mit einer der Stromrichteranordnungen baulich zusammengefasst ist (zum Beispiel von einem gemeinsamen Gehäuse umschlossen und/oder als ein gemeinsam handhabbares Modul ausgebildet ist), zu einer anderen Stromrichteranordnung (mit oder ohne Teil-Zwischenkreis) bereitstellen. Diese Verknüpfung wird im Stand der Technik teils mit dem englischen Begriff "Link" bezeichnet. Lediglich die Primärverbindung und / oder Sekundärverbindung können dann in der vorstehend erwähnten Weise flexibel verlegt werden, wohingegen der Teil-Zwischenkreis optional als eine Art feststehendes Modul innerhalb der zugeordneten Stromrichteranordnungen verbaut sein kann.

Zusammengefasst sieht eine weitere Ausführungsform vor, dass der Gleichspannungs-Zwischenkreis wenigstens einen Teil-Zwischenkreis mit wenigstens einem Kondensator umfasst und bevorzugt zwei solche Teil-Zwischenkreise, insbesondere von jeder verbundenen Stromrichteranordnung einer. Der Gleichspannungs-Zwischenkreis der Anordnung kann also aus dem Verbinden der Teil-Zwischenkreise resultieren und/oder wenigstens einem solchen Teil-Zwischenkreis entsprechen. Der Kondensator ist bevorzugt parallelgeschaltet zu den Anschlüssen von wenigstens einer der Stromrichteranordnungen. Ferner ist dieser bevorzugt durch die Primärverbindung (und z.B. auch der Sekundärverbindung) mit den Anschlüssen der anderen Stromrichteranordnung verbunden.

Die erste und zweite Sekundärleitung können derart relativ zueinander angeordnet sein, dass hierdurch eine niederinduktive Eigenschaft der Sekundärverbindung erreicht wird. Beispielsweise können die Sekundärleitungen miteinander verdrillt oder koaxial zueinander angeordnet sein. Auch das Anordnen in Form beziehungsweise nach Art eines Sternviererkabels ist möglich.

Die Primärleitungen, oder auch nur eine der Primärleitung, können hingegen voneinander beabstandet verlaufen und zum Beispiel nicht miteinander verdrillt sein und/oder allgemein (elektromagnetisch) voneinander abgeschirmt sein.

Wie erwähnt, kann der Gleichspannungs- Zwischenkreis derart ausgebildet sein, dass dessen Resonanzfrequenz(en) außerhalb eines im Betrieb hauptsächlich auftretenden oder allgemein erwarteten Anregungsspektrum der Stromrichteranordnungen liegt bzw. liegen. Das Anregungsspektrum kann durch die Schaltfrequenzen und/oder Taktfrequenz der Stromrichteranordnungen definiert sein. Insbesondere kann es ganzzahlige Vielfache der sogenannten Taktungsharmonischen umfassen. Die Stromrichteranordnungen können in an sich bekannter Weise nach Art einer Pulsweitenmodulation (PWM) betrieben werden und in schneller Reihenfolge Ein- und Ausschaltvorgänge hiervon umfasster Halbleiter-Schaltelementen durchführen. Dies wird im Stand der Technik auch als Taktung bezeichnet.

Insbesondere kann vorgesehen sein, Resonanzfrequenzen der Anordnung und insbesondere der verbundenen Teil-Zwischenkreise derart außerhalb des Anregungsspektrums zu positionieren, dass die Resonanzfrequenz (oder auch die Resonanzfrequenzen) verschieden von und bevorzugt höher als die Frequenzen des Anregungsspektrums sind.

Zusätzlich oder alternativ kann allgemein vorgesehen sein, die Resonanzfrequenz(en) des Gleichspannungs- Zwischenkreises derart einzustellen, dass diese sich auch nicht mit ganzzahligen Vielfachen von Frequenzen des Anregungsspektrums überschneiden.

Zum Einstellen des Resonanzverhaltens bzw. der Resonanzfrequenzen des Gleichspannungs- Zwischenkreises können die Induktivität der Primärverbindung und/oder der Sekundärverbindung geeignet eingestellt werden (z.B. durch Ausbilden mit entsprechenden Geometrien, Relativanordnen einzelner Leitungen, Vorsehen diskreter Bauteile oder durch eine geeignete Materialwahl). Insbesondere kann hierfür die Induktivität der Sekundärverbindung geeignet gewählt werden und im Vergleich zur Primärverbindung bevorzugt möglichst niedrig ausfallen.

Durch Parallelschalten einer weiteren Verbindung zur Primärverbindung (nämlich der Sekundärverbindung) wird die Gesamtinduktivität bereits reduziert. Wenn die parallel geschaltete (Sekundär-)Verbindung selbst auch eine niedrigere Induktivität aufweist, wie allgemein bevorzugt, stellt sich eine noch niedrigere Gesamtinduktivität ein.

In an sich bekannter Weise ist die resultierende Resonanzfrequenz eine Funktion etwaiger Kapazitäten innerhalb der Gleichspannungs-Zwischenkreise (zum Beispiel innerhalb etwaiger Teil-Zwischenkreise und dort bevorzugt in Form von Kondensatoren), sowie der Geometrie (zum Beispiel Länge und Abstand) und der Induktivität der elektrischen Leitungen innerhalb der Verbindung (insbesondere Verbindung der Teil-Zwischenkreise). Wird eine niedrigere Induktivität erzielt, erhöht sich auch die Resonanzfrequenz entsprechend und kann daher gezielt außerhalb eines erwarteten Anregungsspektrums platziert werden.

Gemäß einer erfindungsgemäßen Option des Verfahrens und der Anordnung umfasst die Sekundärverbindung ein Koaxialkabel. Insbesondere kann die Sekundärverbindung zumindest abschnittsweise als Koaxialkabel bereitgestellt sein und/oder durch ein solches gebildet werden. Die Sekundärleitungen können koaxial verlaufende Leitungen innerhalb dieses Koaxialkabels sein. Durch Ausbilden als Koaxialkabel und insbesondere die dadurch erzeugte räumliche Nähe der Leitungen zueinander wird die Induktivität der Sekundärverbindungen effektiv reduziert.
Koaxialkabel umfassen einen Innenleiter, der in einem konstanten Abstand von einem hohlzylindrischen Außenleiter umgeben ist.
Bei Koaxialkabel, die vornehmlich in der Nachrichtentechnik Verwendung finden, dient der Außenleiter hauptsächlich dazu, den Innenleiter vor Störstrahlung abzuschirmen. Für die Umsetzung bei dieser Ausführung ist es jedoch wichtig, dass sowohl der Innenleiter wie auch der Außenleiter zur Stromleitung ausgeführt sind und einen für den Anwendungszweck ausreichenden Leitungsquerschnitt bzw. Leitwert aufweisen.

Weiter alternativ oder zusätzlich kann vorgesehen sein, dass die Sekundärverbindung ein Sternviererkabel umfasst und/oder mit anderen Worten, zumindest abschnittsweise als ein solches Sternviererkabel ausgebildet ist oder durch ein solches bereitgestellt wird. Insbesondere können die Sekundärleitungen Leitungen und/oder Adern dieses Kabels sein beziehungsweise zumindest abschnittsweise als Leitungsabschnitt eines solchen Kabels bereitgestellt werden.

Sternviererkabel sind zum Beispiel aus der Nachrichtentechnik bekannt. Dabei werden vier Leitungen, von denen jeweils zwei eine gemeinsame Funktion besitzen und/oder eine gemeinsame Übertragung ermöglichen, miteinander verdrillt. Insbesondere kann dies derart erfolgen, dass in Umfangsrichtung betrachtet (zum Beispiel bei einem Querschnitt durch das Kabel) eine Leitung von jeweils zwei Leitungen mit einer anderen (gemeinsamen) Übertragungsfunktion eingerahmt oder mit anderen Worten zwischen diesen eingeschlossen ist.

Sternviererkabel werden allgemein auch als Viererverseilung oder auch als Sternvierer bezeichnet. Die vorstehend geschilderte Verdrillung von vier Leitungen oder, anders ausgedrückt, vier einzelnen Adern kann derart erfolgen, dass sich sogenannte kreuzförmig verseilte Doppeladern bilden, wobei vorliegend eine erste Doppelader die erste Sekundärverbindung und die weitere Doppelader die zweite Sekundärverbindung bilden kann.

Zusammengefasst kann zum Beispiel vorgesehen sein, dass die erste Sekundärleitung zwei Einzelleitungen und die zweite Sekundärleitung zwei weitere Einzelleitungen umfasst und diese nach Art eines Sternviererkabels kreuzförmig verseilt angeordnet sind. Auch hierdurch wird die Induktivität der Sekundärverbindung signifikant gesenkt.

Prinzipiell kann vorgesehen sein, dass die Sekundärverbindung einen höheren ohmschen Widerstand aufweist als die Primärverbindung. Insbesondere zur Erreichung einer geringen Induktivität der Sekundärleitung bei verdrillten Leitungen ist dies vorteilhaft. Es kann also eine im Vergleich zur Primärverbindung hochohmige und niederinduktive Sekundärverbindung vorgesehen sein. Auch hierüber kann das Resonanzverhalten in gewünschter Weise beeinflusst werden. Der erhöhte Widerstand kann für sämtliche (Sekundär-) Leitungen der Sekundärverbindung gelten, d.h. jede der Sekundärleitungen kann jeweils einen höheren ohmschen Widerstand als die Primärverbindung und insbesondere als sämtliche Primärleitungen aufweisen.

Die ohmschen Widerstände der Sekundärleitungen können identisch sein. Wie nachstehend näher erläutert, können bei einer Mehrzahl von Sekundärleitungen aber auch jeweils unterschiedliche ohmsche Widerstände vorliegen. Diese können aber nach wie vor jeweils höher als diejenigen der Primärverbindung bzw. der Primärleitungen sein.

Der ohmsche Widerstand der Sekundärverbindung bzw. einer jeden Sekundärleitung kann z.B. über die Wahl eines im Vergleich zu den Primärleitungen kleineren Leiterquerschnitts oder eines geeigneten Leitermaterials eingestellt werden. Alternativ können diskrete ohmsche Widerstandselemente vorgesehen sein.

Genauer gesagt sieht eine Weiterbildung der Anordnung und das Verfahren vor, dass wenigstens eine von erster und zweiter Sekundärleitung ein ohmsches Widerstandselement umfasst. Hierbei kann es sich um einen diskreten elektrischen Widerstand handeln, beispielsweise um ein einzelnes Widerstandsbauteil. Dieses wird bevorzugt in Serie mit einem etwaigen Koaxialkabel oder Sternviererkabel der vorstehend genannten Art geschaltet, und zwar mit wenigstens einer Sekundärleitung, die von diesem Kabel umfasst ist.

Durch Vorsehen eines Widerstandselements (oder allgemein Erhöhen des ohmschen Widerstands in einer Leitung, sh. u.) kann ein Dämpfungsverhalten des Gleichspannungs-Zwischenkreises und insbesondere der Sekundärverbindung gezielt eingestellt werden. Insbesondere können hierdurch hochfrequente Schwingungsanteile gedämpft werden. Bei der vorliegenden Lösung ist vorteilhaft, dass bevorzugt eine Bedämpfung höherer Resonanzen bzw. Frequenzen vorgesehen ist. Dies ist wesentlich verlustärmer möglich, als bei bisherigen Entkopplungsnetzwerken üblich, da die anregenden Harmonischen mit wachsender Frequenz deutlich geringere Amplituden aufweisen können.

Zusätzlich oder alternativ kann vorgesehen sein, dass wenigstens eine von erster und zweiter Sekundärleitung ein induktives (Widerstands-) Element (zum Beispiel eine diskrete Kapazität) umfasst. Erneut kann diese in Serie mit der entsprechenden Leitung geschaltet sein, welche wiederum in einem der vorstehend diskutierten Kabel geführt beziehungsweise durch dieses bereitgestellt werden kann. Das kapazitive Element kann als ein diskreter Kondensator realisiert sein oder einen solchen umfassen. Es kann allgemein eine frequenzabhängige Impedanz bereitstellen. Vorteilhafterweise kann ein solches Element und insbesondere ein Serienkondensator (d.h. in Serie geschalteter Kondensator) in der Sekundärverbindung Gleichstromanteile blockieren. Diese können dann überwiegend oder sogar ausschließlich in der niederohmigen Primärverbindung fließen.

Alternativ oder zusätzlich kann vorgesehen sein, dass die erste und zweite Sekundärleitung unterschiedlich hohe ohmsche Widerstände oder unterschiedliche induktive Widerstände aufweisen (das heißt, unterschiedliche Induktivitäten besitzen). Dies kann zum Beispiel durch unterschiedliche Leiterquerschnitte oder Leitermaterialien erreicht werden. Diskrete Widerstandselemente sind dann nicht zwingend erforderlich.

Eine Weiterbildung sieht vor, dass die erste Stromrichteranordnung als ein Gleichrichter betreibbar ist (oder mit anderen Worten dazu eingerichtet ist, als ein solcher betreiben zu werden), der Wechselstrom in Gleichstrom wandelt und in den Gleichspannungs-Zwischenkreis einspeist. Dies kann zum Beispiel in einem ersten Betriebsmodus der Anordnung erfolgen. Ferner kann die zweite Stromrichteranordnung (bevorzugt in diesem selben ersten Betriebsmodus oder allgemein gleichzeitig) als ein Wechselrichter betreibbar sein (oder mit anderen Worten dazu eingerichtet sein, als ein solcher betreiben zu werden), der Gleichstrom des Gleichspannungs-Zwischenkreises in Wechselstrom wandelt.

Es kann auch ein weiterer Betriebsmodus der Anordnung vorgesehen sein, bei der die erste Stromrichteranordnung in umgekehrter Weise als Wechselrichter und die zweite Stromrichteranordnung in umgekehrter Weise als Gleichrichter betrieben wird. Zwischen diese Betriebsmodi kann bedarfsweise gewechselt werden.

Im ersten Betriebsmodus kann der Gleichspannungs-Zwischenkreis durch die erste Stromrichteranordnung zum Beispiel mit aus einem Stromversorgungsnetz aufgenommener elektrischer Energie gespeist werden. Diese Energie kann dann in den Gleichspannungs-Zwischenkreis eingespeist, durch die zweite Stromrichteranordnung entnommen und an Verbraucher weitergeleitet werden. Ein solcher Betriebsmodus kann zum Beispiel dann vorliegen, wenn die Anordnung elektrische Energie von extern aufnimmt und Verbrauchern zur Verfügung stellt. Im Fall eines Schienenfahrzeugs, wie erfindungsgemäß allgemein bevorzugt, kann es sich hierbei zum Beispiel um einen Betriebsmodus zum Erzeugen von Traktionsenergie handeln, bei der die zum Beispiel aus einer Oberleitung aufgenommene elektrische Energie in den Gleichspannungs-Zwischenkreis eingespeist und von dort vorzugsweise an wenigstens einen Traktionsmotor des Schienenfahrzeugs weitergeleitet wird.

Bei dem zweiten Betriebsmodus kann es sich hingegen um den eingangs erläuterten Betrieb zum Rückspeisen von elektrischer Energie handeln, beispielsweise wenn elektrische Energie, die in einem regenerativen Bremsmodus erzeugt wird, in das Versorgungsstromnetz zurückgespeist werden soll.

Gemäß einer Weiterbildung der Anordnung und des Verfahrens sind die erste Stromrichteranordnung und die zweite Stromrichteranordnung (insbesondere deren Anschlüsse) um wenigstens einen Meter voneinander beabstandet. Dies kann zum Beispiel in einer vorstehend diskutierten horizontalen Raumebene erfolgen, sodass ein horizontaler Abstand der Stromrichteranordnung wenigstens einen Meter und zum Beispiel wenigstens zwei Meter oder wenigstens fünf Meter betragen kann.

Zusätzlich oder alternativ können die erste und die zweite Stromrichteranordnung auf unterschiedlichen Höhenniveaus angeordnet sein. Die Höhenniveaus können sich wiederum um wenigstens einen halben Meter oder um wenigstens zwei Meter in vertikaler Richtung voneinander unterscheiden. Auf diese Weise können die Stromrichteranordnungen in einem verfügbaren Einbauraum angeordnet werden und trotz entsprechender Beabstandungen mit den vorliegend offenbarten Primär- und Sekundärleitungen verbunden werden.

Die Anordnung kann auch wenigstens eine Steuereinrichtung umfassen, die bevorzugt dazu eingerichtet sein kann, jegliche Komponenten der Anordnung anzusteuern und insbesondere deren Betriebsweise miteinander zu koordinieren. Beispielsweise kann die Steuereinrichtung dazu eingerichtet sein, die erste und/oder zweite Stromrichteranordnung derart anzusteuern, dass wahlweise der hierin geschilderte erste oder zweite Betriebsmodus aktivierbar ist. Die Steuereinrichtung kann wenigstens einen Mikrocontroller umfassen und in einer digitalen Speichereinrichtung (zum Beispiel der Anordnung) hinterlegte Programmanweisungen abarbeiten.

Die Erfindung betrifft auch ein (elektrisches) Antriebssystem oder, mit anderen Worten, ein Traktionssystem eines Schienenfahrzeugs, umfassend eine Anordnung nach einem der vorangehenden Aspekte. Bei dem Schienenfahrzeug kann es sich zum Beispiel um eine Lokomotive handeln oder um einen Triebwagen oder um einen Zug mit mehreren Einzelfahrzeugen. Das Schienenfahrzeug kann auch wenigstens eine der weiteren Komponenten umfassen: einen Haupttransformator, einen Hauptschalter, wenigstens einen Traktionsmotor und / oder wenigstens einen Hilfsbetrieb.

Unter Hilfsbetrieb können elektrische Verbraucher verstanden werden, die zum Erzeugen einer Traktionsleistung nicht zwingend erforderlich sind, dies allerdings unterstützen können, zum Beispiel wenn es sich um Lüfter der Traktionsmotoren oder Stromrichteranordnungen handelt. Hilfsbetriebe können aber auch von dem Erzeugen der Traktionsleistung generell unabhängige Funktionen bereitstellen, wie eine Innenraumbeleuchtung, eine Innenraumklimatisierung und dergleichen.

Die zweite Stromrichteranordnung, die zumindest in einem ersten Betriebsmodus dem Gleichspannungs-Zwischenkreis elektrische Energie entnimmt, kann einen Traktionsmotor des Antriebssystems mit elektrischer Energie (insbesondere Wechselstrom) versorgen und entsprechend als Motorstromrichter bezeichnet werden. Es kann sich aber auch um einen Hilfsbetrieberichter handeln, wenn anderweitige elektrische Verbraucher und insbesondere vorstehend erwähnte Hilfsbetriebe versorgt werden.

Die Erfindung betrifft auch ein Verfahren zum Herstellen einer Anordnung, die über einen Gleichspannungs-Zwischenkreis verbundene Stromrichteranordnungen aufweist, und die vorzugsweise für ein Schienenfahrzeug vorgesehen ist, umfassend u.a. die Schritte:
- Bereitstellen einer ersten Stromrichteranordnung, die dazu eingerichtet ist, Gleichstrom in einen Gleichspannungs-Zwischenkreis einzuspeisen;
- Bereitstellten einer zweiten Stromrichteranordnung, die dazu eingerichtet ist, dem Gleichspannungs-Zwischenkreis Gleichstrom zu entnehmen;
- Bereitstellen (oder, mit anderen Worten, Herstellen oder Erzeugen) einer elektrischen Primärverbindung des Gleichspannungs-Zwischenkreises durch elektrisches Verbinden (jeweils) erster Anschlüsse der Stromrichteranordnungen (miteinander) mit wenigstens einer ersten Primärleitung und durch elektrisches Verbinden (jeweils) zweiter Anschlüsse der Stromrichteranordnungen (miteinander) mit wenigstens einer zweiten Primärleitung;
- Bereitstellen (oder, mit anderen Worten, Herstellen oder Erzeugen) einer im Vergleich zur Primärverbindung niederinduktiven Sekundärverbindung des Gleichspannungs-Zwischenkreises durch Parallelschalten (d. h. paralleles Anordnen und Verbinden) wenigstens einer ersten Sekundärleitung zu der ersten Primärleitung und Parallelschalten wenigstens einer zweiten Sekundärleitung zu der zweiten Primärleitung.

Das Verfahren kann jegliches weitere Merkmal, jegliche Variante und jegliche Weiterbildung umfassen, um sämtliche hierin geschilderten Betriebszustände, Effekte und Wechselwirkungen bereitzustellen. Insbesondere kann mit dem Verfahren eine Anordnung gemäß jeglicher hierin geschilderter Ausführungsform hergestellt werden. Sämtliche hierin erwähnten Ausführungen zu und Weiterbildungen von Anordnungsmerkmalen können auf die gleichlautenden Verfahrensmerkmale ebenso zutreffen beziehungsweise bei diesen vorgesehen sein.

Im Folgenden werden Ausführungsformen der Erfindung anhand der beigefügten schematischen Figuren erläutert. Dabei können figurenübergreifend für gleichartige oder gleichwirkende Merkmale die gleichen Bezugszeichen verwendet werden.
- Figur 1: zeigt eine schematische Darstellung einer Anordnung gemäß einem ersten Ausführungsbeispiel der Erfindung, die mittels eines erfindungsgemäßen Verfahrens hergestellt wurde;
- Figur 2: zeigt eine Sekundärverbindung einer Anordnung aus Figur 1 gemäß einen weiterem Ausführungsbeispiel;
- Figur 3: zeigt eine Sekundärverbindung der Anordnung aus Figur 1 gemäß einem noch weiteren Ausführungsbeispiel.

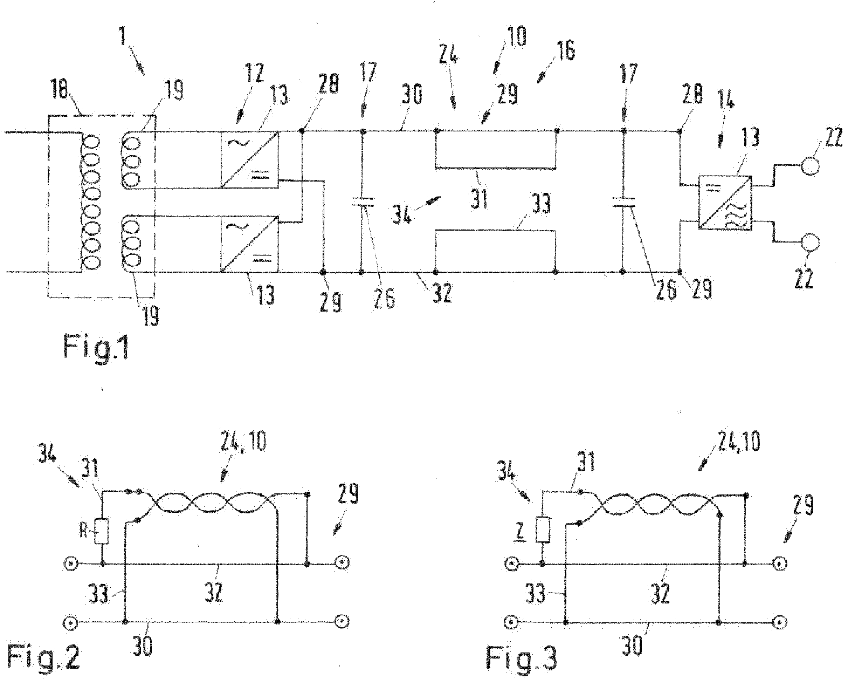

In Figur 1 ist eine Anordnung 10 gemäß einem Ausführungsbeispiel der Erfindung gezeigt. Die Anordnung 10 umfasst eine nachstehend noch näher erläuterte erste Stromrichteanordnung 12 und eine zweite Stromrichteanordnung 14 sowie einen dazwischen geschalteten Gleichspannungs-Zwischenkreis 16.

Die Anordnung 10 ist von einem Antriebssystem 1 eines nicht weiter dargestellten Schienenfahrzeugs umfasst. Als zusätzliche Komponenten des Antriebssystems 1 ist ein Haupttransformator 18 gemäß herkömmlicher Bauart gezeigt sowie Traktionsmotoren 22, die jeweils nachstehend noch näher erläutert werden.

Nicht gezeigt sind optionale Hilfsbetriebe der vorstehend geschilderten Art, welche über die zweite Stromrichteranordnung 18 oder aber eine separate Stromrichteranordnung mit elektrischer Energie versorgbar sind.

Ferner nicht gezeigt ist eine optionale, aber bevorzugte Steuereinrichtung des Antriebssystems 1, welches den Betrieb der nachstehend erläuterten Komponenten und insbesondere der Stromrichteranordnungen 12,14 steuern und koordinieren kann. Insbesondere kann diese Steuereinrichtung dazu eingerichtet sein, das Antriebssystem 1 beziehungsweise die Anordnung 10 bedarfsweise in einem hierin erwähnten ersten oder zweiten Betriebsmodus zu betreiben bzw. zu schalten. Die Steuereinrichtung kann wenigstens eine Prozesseinrichtung mit wenigstens einem Mikrocontroller umfassen, um Programmanweisungen zum Ansteuern der Komponenten des Antriebssystems 1 auszuführen.

In einem ersten Betriebsmodus zum Erzeugen von Traktionsenergie wird über einen nicht dargestellten Stromabnehmer elektrische Energie aus einem fahrzeugexternen Stromnetz aufgenommen, zum Beispiel von einer Oberleitung oder einer Stromschiene (dritte Schiene). Mit dem Haupttransformator 18 wird die im gezeigten Fall anliegende Wechselspannung auf ein gewünschtes Spannungsniveau transformiert.

Anschließend wird die transformierte Spannung der ersten Stromrichteranordnung 12 zugeführt, welche zumindest in einem ersten Betriebsmodus als ein Gleichrichter zum Erzeugen von Gleichstrom betrieben wird. In dem gezeigten Beispiel sind zwei einzelne Stromrichter bzw. Stromrichtermodule 13 der Stromrichteranordnung 12 gezeigt, die jeweils an eine eigene Sekundärwicklung 19 des Haupttransformators 18 angeschlossen sind. Die Stromrichteranordnung 12 kann auch eine beliebige andere Anzahl von Stromrichtern 13 umfassen, zum Beispiel auch lediglich einen einzigen. Die Stromrichter 13 können optional ebenfalls mehrteilig aufgebaut und zum Beispiel aus mehreren einzelnen Modulen zusammengesetzt sein.

Der von der ersten Stromrichteranordnung 12 erzeugte Gleichstrom wird in den Gleichspannungs-Zwischenkreis 16 eingespeist. Dieser umfasst zwei Teil-Zwischenkreise 17, die durch einen dazwischen positionierten Verbindungsabschnitts 24 (englisch: Link) elektrische miteinander verbunden sind.

Die Teil-Zwischenkreise 17 umfassen jeweils wenigstens eine Kapazität bzw. einen Zwischenkreiskondensator 26. Die Teil-Zwischenkreise 17 können den Stromrichteranordnungen 12,14 zugeordnet und insbesondere baulich damit zusammengefasst sein. Die Stromrichteranordnungen 12, 14 samt jeweils damit zusammengefasster Teil-Zwischenkreise 17 können demnach räumlich voneinander beabstandet sein und durch die den bevorzugt flexibel anordenbaren oder, anders ausgedrückt, flexibel verlegbaren Verbindungsabschnitt 24 miteinander verbunden werden. Diese Verbindung erfolgt derart, dass die Teil-Zwischenkreise 17 parallelgeschaltet werden.

Allgemein ausgedrückt werden bei dem gezeigten Ausführungsbeispiel, aber auch gemäß einem übergeordneten Gedanken der Erfindung, räumlich getrennte Gelichspannungs-Zwischenkreise unterschiedlicher Stromrichteranordnungen 12, 14 (d.h. deren Teil-Zwischenkreise 17) miteinander verbunden. Jede der Stromrichteranordnungen 12, 14 könnte prinzipiell auch eine Mehrzahl von Teil-Zwischenkreisen 17 umfassen, z.B. einen je optionalem Stromrichter oder Stromrichtermodul 13.

In Figur 1 ist auch gezeigt, dass die Stromrichteranordnung 12 über zwei definierte Anschlüsse oder Klemmen 28 verfügt, die zum Beispiel einen Minuspol und einen Pluspol der Stromrichteranordnung 12 bilden können. Jeder der Stromrichter 13 ist mit beiden dieser Anschlüsse 28 verbunden. Auch für die nachstehend erläuterte zweite Stromrichteranordnung 14 sind entsprechende Anschlüsse 28 gezeigt. Der Vollständigkeit halber ist anzumerken, dass auch die jeweiligen Teil-Zwischenkreise 17 mit den Anschlüssen 28 der Stromrichteranordnungen 12, 14 verbunden sind sowie auch mit dem Verbindungsabschnitt 24.

Gezeigt ist außerdem eine in Figur 1 gradlinig dargestellte erste Primärleitung 30 und eine zweite, ebenfalls gradlinig dargestellte Primärleitung 32. Die realen Verläufe der Primärleitungen 30, 32 (aber auch nachfolgend erläuterter Sekundärleitungen 31, 33) können auch nicht-gradlinig sein, zum Beispiel mehrfach gebogen, verwinkelt oder allgemein kurvenförmig. Die erste und die zweite Primärleitung 30, 32 bilden eine Primärverbindung 29 innerhalb des Verbindungsabschnitts 24. Sie verbinden jeweils die Anschlüsse 28 der Stromrichteranordnungen 12 elektrisch miteinander und genauer gesagt die Pluspole (zum Beispiel mittels der ersten Primärleitung 30) und die Minuspole (zum Beispiel mittels der zweiten Primärleitung 32) dieser Stromrichteranordnungen 12,14.

Gezeigt sind auch erste und zweite Sekundärleitungen 31, 33, die eine Sekundärverbindung 34 bilden. Die erste Sekundärleitung 31 ist der ersten Primärleitung 30 parallelgeschaltet. Die zweite Sekundärleitung 33 ist der zweiten Primärleitung 32 parallelgeschaltet. Durch dieses Parallelschalten wird die Gesamtinduktivität des Verbindungsabschnitts 24 reduziert. Weitere Induktivitäts-Reduktionen ergeben sich durch Festlegen von elektrischen Eigenschaften von insbesondere der Sekundärverbindung 34, und zwar bevorzugt derart, dass deren Induktivitäten reduziert und die Resonanzfrequenzen des Verbindungsabschnitts 24 und somit des Gleichspannung-Zwischenkreises 26 außerhalb eines erwarteten Anregungsspektrums liegen.

In dem gezeigten Beispiel handelt es sich bei der Sekundärverbindung 34 um eine einfache Zweidrahtleitung, umfassend die erste und die zweite Sekundärleitung 31, 33, wobei eine solche Zweidrahtleitung nicht beansprucht wird.

Die Sekundärleitungen 31, 32 verlaufen gemäß einer erfindungsgemäßen Option stattdessen in einem Koaxialkabel oder, anders ausgedrückt, werden durch ein solches bereitgestellt, wodurch eine besonders deutliche Reduzierung der Induktivität erreicht wird. Ebenso können die erste und zweite Sekundärleitung 31, 33 jeweils doppeladerig ausgebildet und gemäß einer weiteren erfindungsgemäßen Option in einem gemeinsamen Sternviererkabel verlaufen oder, anders ausgedrückt, durch ein solches bereitgestellt werden. Auch hierdurch wird eine effektive Induktivitätsreduzierung erzielt. Weitere Möglichkeiten zum Ausbilden der Sekundärleitungen 31,33 werden anhand der Figuren 2 und 3 nachstehend erläutert.

Der Verbindungsabschnitt 24 und insbesondere dessen Primärleitungen 30, 32 sind, wie vorstehend bereits erwähnt, mit den Anschlüssen 28 der zweiten Stromrichteranordnung 14 verbunden. Diese umfasst lediglich beispielhaft nur einen Stromrichter 13, der aber wiederum moduladerig beziehungsweise mehrteilig ausgebildet sein kann. Der Stromrichter 13 versorgt zumindest in einem ersten Betriebsmodus, in dem er als Wechselrichter betrieben wird, lediglich beispielhaft zwei Traktionsmotoren 22 mit elektrischer Energie aus dem Gleichspannungs- Zwischenkreis 16. Nicht gezeigt ist, dass die zweite Stromrichteranordnung 14 auch weitere Stromrichter 13 und insbesondere Hilfsbetrieberichter umfassen kann, um Hilfsbetriebe der vorstehend erläuterten Art zu versorgen.

Soll die Anordnung 10 des Antriebssystem 1 in einem zweiten Betriebsmodus betrieben werden, wird die zweite Stromrichteranordnung 14 als Gleichrichter und wird die erste Stromrichteranordnung 12 als Wechselrichter betrieben. Folglich kann elektrische Energie, die bei einem regenerativen Bremsbetrieb der Traktionsmotoren 22 erzeugt wird, in ein nicht dargestelltes Versorgungsstromnetz zurückgespeist werden.

In Figur 2 ist ein Gleichspannungs- Zwischenkreis 16 und genauer gesagt dessen Verbindungsabschnitt 24 gemäß einem weiteren Ausführungsbeispiel gezeigt. Erneut erkennt man die gradlinig dargestellten Primärleitungen 30, 32, welche die Primärverbindung 29 bilden. Ferner ist erneut jeweils eine Sekundärleitung 31, 33 einer Sekundärverbindung 34 einer der Primärleitungen 30, 32 parallelgeschaltet.

Im Fall von Figur 2 sind die Sekundärleitungen 31,33 miteinander verdrillt, um deren Induktivität zu verringern und insbesondere gegenüber der Induktivität der Primärverbindung 29 abzusenken.

Als ein weiteres optionales Merkmal sind die Sekundärleitungen 31, 33 mit einem voneinander abweichenden ohmschen Widerstand ausgebildet, um eine Dämpfungswirkung bereitzustellen. Insbesondere weicht dieser ohmsche Widerstand signifikant voneinander ab, zum Beispiel um wenigstens 20% oder wenigstens 50%. Es wird somit eine hochohmige niederinduktive Sekundärleitung 31, 33 und eine niedrigohmige niederinduktive Sekundärleitung 31, 33 bereitgestellt.

Prinzipiell kann der unterschiedliche ohmsche Widerstand durch Vorsehen verschiedenartiger Leitungseigenschaften (zum Beispiel unterschiedlicher Leitungsquerschnitte und/oder Leitermaterialien) der Sekundärleitungen 31, 33 erzielt werden. Zusätzlich oder alternativ kann, wie in Figur 2 gezeigt, in einer der Sekundärleitungen 31, 33 ein diskretes Widerstandselement R vorgesehen werden.

In Figur 3 ist als eine weitere Alternative eine Ansicht analog zu derjenigen aus Figur 2 gezeigt. Der einzige Unterschied ist, dass in diesem Fall das ohmsche Widerstandselement R durch eine frequenzabhängige Impedanz Z ersetzt ist. Auf diese Weise werden innerhalb der Sekundärverbindung 34 unterschiedliche Induktivitäten bereitgestellt, das heißt die erste und die zweite Sekundärleitung 31, 33 weisen unterschiedliche Induktivitäten auf.

## Patentansprüche

1. Anordnung (10), insbesondere für ein elektrisches Antriebssystem eines Schienenfahrzeugs, mit:
- einer ersten Stromrichteranordnung (12), die dazu eingerichtet ist, Gleichstrom in einen Gleichspannungs-Zwischenkreis (16) einzuspeisen;
- einer zweiten Stromrichteranordnung (14), die dazu eingerichtet ist, dem Gleichspannungs-Zwischenkreis (16) Gleichstrom zu entnehmen;
wobei die erste Stromrichteranordnung (12) und die zweite Stromrichteranordnung (14) räumlich, vorzugsweise um wenigstens einen Meter, voneinander beabstandet sind;
wobei der Gleichspannungs-Zwischenkreis (16) eine elektrische Primärverbindung (29) der ersten und zweiten Stromrichteranordnung (12, 14) aufweist, mit wenigstens einer ersten Primärleitung (30) zum elektrischen Verbinden erster Anschlüsse (28) der Stromrichteranordnungen (12, 14) und wenigstens einer zweiten Primärleitung (32) zum elektrischen Verbinden zweiter Anschlüsse (29) der Stromrichteranordnungen (12, 14), wobei die erste und zweite Primärleitung (30, 32) zumindest abschnittsweise jeweils flexible Kabel sind;
wobei der Gleichspannungs-Zwischenkreis (16) ferner eine im Vergleich zur Primärverbindung (29) niederinduktive Sekundärverbindung (34) aufweist, mit wenigstens einer ersten Sekundärleitung (31), die der ersten Primärleitung (30) parallelgeschaltet ist, und wenigstens einer zweiten Sekundärleitung (33), die der zweiten Primärleitung (32) parallelgeschaltet ist;
wobei die Sekundärverbindung (34) ein Sternviererkabel mit den Sekundärleitungen (31, 33) als Adern umfasst: oder
wobei die Sekundärverbindung (34) ein Koaxialkabel umfasst, innerhalb dem die Sekundärleitungen (31,33) koaxial verlaufen.

2. Anordnung (10) nach Anspruch 1,
wobei der Gleichspannungs-Zwischenkreis (16) wenigstens einen Teil-Zwischenkreis (17) mit wenigstens einem Kondensator (26) umfasst, der parallelgeschaltet zu den Anschlüssen (28, 29) einer der Stromrichteranordnungen (12, 14) ist und durch die Primärverbindung (29) mit den Anschlüssen (28, 29) der anderen Stromrichteranordnung (12, 14) elektrisch verbunden ist.

3. Anordnung (10) nach einem der vorangehenden Ansprüche,
wobei wenigstens eine von erster und zweiter Sekundärleitung (31, 33) ein ohmsches Widerstandselement (R) umfasst, und/oder
wobei die erste und zweite Sekundärleitung (31, 33) unterschiedliche ohmsche Widerstände aufweisen.

4. Anordnung (10) nach einem der vorangehenden Ansprüche,
wobei wenigstens eine von erster und zweiter Sekundärleitung (31, 33) ein induktives Element (Z) umfasst, und/oder
wobei die erste und zweite Sekundärleitung (31, 33) unterschiedliche Induktivitäten aufweisen.

5. Anordnung (10) nach einem der vorangehenden Ansprüche,
wobei die erste Stromrichteranordnung (12) dazu eingerichtet ist, als ein Gleichrichter betrieben zu werden, der Wechselstrom in Gleichstrom wandelt und in den Gleichspannungs-Zwischenkreis (16) einspeist; und
wobei die zweite Stromrichteranordnung (14) dazu eingerichtet ist, als ein Wechselrichter betrieben zu werden, der Gleichstrom des Gleichspannungs-Zwischenkreises (16) in Wechselstrom wandelt.

6. Anordnung (10) nach einem der vorangehenden Ansprüche,
wobei die erste Stromrichteranordnung (12) und die zweite Stromrichteranordnung (14) auf unterschiedlichen Höhenniveaus angeordnet sind.

7. Antriebssystem (1) eines Schienenfahrzeugs,
umfassend eine Anordnung (10) nach einem der vorangehenden Ansprüche.

8. Verfahren zum Herstellen einer Anordnung (10), die über einen Gleichspannungs-Zwischenkreis (16) verbundene Stromrichteranordnungen (12, 14) aufweist,
umfassend die Schritte:
- Bereitstellen einer ersten Stromrichteranordnung (12), die dazu eingerichtet ist, Gleichstrom in einen Gleichspannungs-Zwischenkreis (16) einzuspeisen;
- Bereitstellen einer zweiten Stromrichteranordnung (14), die dazu eingerichtet ist, dem Gleichspannungs-Zwischenkreis (16) Gleichstrom zu entnehmen, wobei die erste Stromrichteranordnung (12) und die zweite Stromrichteranordnung (14) räumlich, vorzugsweise um wenigstens einen Meter, voneinander beabstandet sind;
- Bereitstellen einer elektrischen Primärverbindung (29) des Gleichspannungs-Zwischenkreises (16) durch elektrisches Verbinden erster Anschlüsse (28) der Stromrichteranordnungen (12, 14) mit wenigstens einer ersten Primärleitung (30) und durch elektrisches Verbinden zweiter Anschlüsse (29) der Stromrichteranordnungen (12, 14) mit wenigstens einer zweiten Primärleitung (32), wobei die erste und zweite Primärleitung (30,32) zumindest abschnittsweise jeweils flexible Kabel sind; und
- Bereitstellen einer im Vergleich zur Primärverbindung (29) niederinduktiven Sekundärverbindung (34) des Gleichspannungs-Zwischenkreises (16) durch Parallelschalten wenigstens einer ersten Sekundärleitung (31) zu der ersten Primärleitung (30) und Parallelschalten wenigstens einer zweiten Sekundärleitung (33) zu der zweiten Primärleitung (32),
wobei die Sekundärverbindung (34) ein Sternviererkabel mit den Sekundärleitungen (31, 33) als Adern umfasst; oder
wobei die Sekundärverbindung (34) ein Koaxialkabel umfasst, innerhalb dem die Sekundärleitungen (31,33) koaxial verlaufen.
